# EUROPEAN PATENT APPLICATION

(11) **EP 2 110 984 A1**
(43) Date of publication of application: **21.10.2009**
(21) Application number: 08800951.9
(22) Date of filing: 23.09.2008
(51) Int. Cl.: H04L 12/16, H04L 12/56

(54) **METHOD, DEVICE AND SYSTEM FOR PROCESSING SERVICE INFORMATION**

(30) Priority: 27.09.2007 CN 200710152522
(71) Applicant: Huawei Technologies Co., Ltd., Longgang District, Shenzhen Guangdong 518129 (CN)
(72) Inventor: HUANG, Xiaofeng, Guangdong 518129 (CN)
(74) Representative: Epping - Hermann - Fischer
(86) International application number: PCT/CN2008/072462
(87) International publication number: WO 2009/043271

(57) **Abstract**

A method for processing service information is disclosed. The method includes: receiving distinctive service information transmitted independently; determining the multicast address of the user who needs to receive the distinctive service information; replacing the destination address in the packet of the distinctive service information with the multicast address of the user; and multicasting the distinctive service information to the user. A multicast replication node and a user-side apparatus are also disclosed.

## Description

This application claims priority to Chinese Patent Application No. 200710152522.3, filed with the Chinese Patent Office on September 27, 2007 and entitled "Method and Apparatus for Processing Service Information", which is incorporated herein by reference in its entirety.

### Field of the Invention

The present invention relates to the communication field, and in particular, to a method, apparatus, and system for processing service information.

### Background of the Invention

Internet Protocol Television (IPTV) is a new service generated after integration of the Internet service and the traditional television service, and is important for the growth of broadband services currently. The IPTV services include video services such as Video On Demand (VOD) and live broadcast, and the implementation of such services is almost the same as that of the traditional television service. Besides, IPTV services include distinctive information services, for example, important announcement, weather forecast, financial news, shopping advertisement, polling, and media interaction, which are different from the traditional television service. The distinctive information services may be delivered actively, or delivered as required by a user. The distinctive information services meet the individualized requirements of users, and are important services to be developed among the IPTV services. The distinctive service information is time-critical. It usually includes only a single content and changes fast, and the content survives for only a short time. If the distinctive service information is carried on a separate channel, many resources are wasted. If a user has not demanded this channel, the user is unable to receive the distinctive service information in real time, and the time value of the information is lost. Therefore, such information is generally overlaid on the relevant or corresponding channel, for example, the financial information is overlaid on the financial channel, and the weather forecast is overlaid on the tourism channel, for transmitting and playing together.

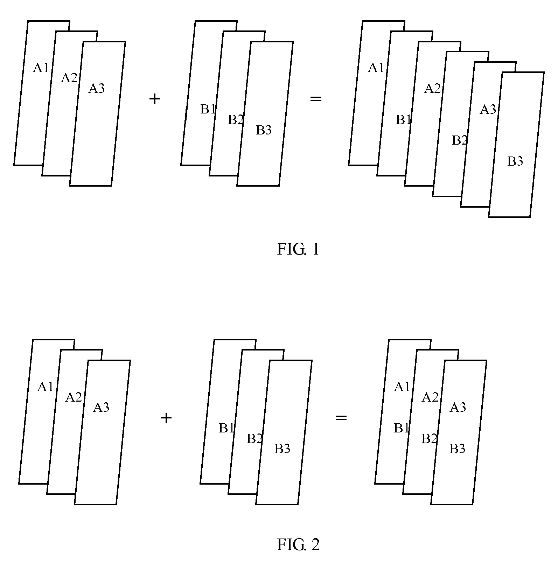

In the related art, through a video synthesis, the data of two or more video services is overlaid together in a specified way to generate new video service data. The new video service data includes all contents of the original video service data. There are two synthesis modes: flow-based synthesis, and layer-based synthesis. Flow-based synthesis means that: The video frames of two video services are interleaved together at an interval of one frame. Every video frame of the newly synthesized video service comes from either of the video services under synthesis. The final output result is a video frame sequence overlaid chronologically, as shown in FIG. 1. Layer-based synthesis means that: The video frames of two video services are synthesized according to the frame structure. Every video frame of the newly synthesized video service includes the contents of both video services under synthesis, as shown in FIG. 2.

Therefore, all the users who receive the same normal service may receive only the same distinctive service. The final synthesis of videos relies on a video synthesis system such as a software system or a hardware system, thus restricting the mode of releasing the distinctive information, including the video format, and unified layout and adjustment of the information. Consequently, the synthesized video service may not meet the individualized requirements or release requirements of IPTV services.

### Summary of the Invention

A method, apparatus, and system for processing service information are provided in various embodiments of the present invention to implement independent multicast transmission of distinctive service information and facilitate different users to receive different services.

A method for processing service information includes:
receiving distinctive service information transmitted independently;
determining a multicast address of a user who needs to receive the distinctive service information; and
replacing a destination address in a packet of the distinctive service information with the multicast address of the user, and multicasting the distinctive service information to the user.

A multicast replication node includes:
a receiving module, configured to receive distinctive service information transmitted independently;
a selecting module, configured to determine a multicast address of a user who needs to receive the distinctive service information; and
a sending module, configured to replace a destination address in a packet of the distinctive service information with the multicast address of the user and multicast the distinctive service information to the user.

A user-side apparatus includes:
a receiving module, configured to receive distinctive service information independently;
a configuring module, configured to judge whether a destination address in a packet of the distinctive service information is a multicast address of the user-side apparatus; and
a decoding module, configured to decode the distinctive service information independently and output the decoded information if the configuring module determines that the destination address is the multicast address of the user-side apparatus.

A system for processing distinctive service information includes:
a bearer network, configured to: receive normal service information and distinctive service information from one or more video sources, and forward the normal service information and the distinctive service information to each multicast replication node;
the multicast replication node, configured to: receive the service information sent by the bearer network, distinguish the normal service information from the distinctive service information in the service information, determine a user who needs to receive the distinctive service information and a multicast address of the user, replace a destination address in a packet of the distinctive service information with the multicast address of the user, and send the packet of the distinctive service information to the determined user; and
a user-side apparatus, configured to: receive the distinctive service information and the normal service information sent by the multicast replication node, control a main window among windows to play the normal service information, and control a non-main window among the windows to play the distinctive service information.

In the embodiments of the present invention, the distinctive service information and the normal service information are processed separately so that the implementation of the distinctive service information and the normal service information is more flexible. Moreover, the distinctive service information is transmitted independently of the normal service information in multicast mode without strictly depending on the normal service information. Therefore, the multicast transmission of the distinctive service information is more flexible. Moreover, in the embodiments of the present invention, the distinctive service information is decoded independently, and played in an independent window, thus further meeting users' individualized requirements and requirements on the release of service information.

### Brief Description of the Drawings

FIG. 1 is a schematic drawing of video synthesis in flow-based synthesis mode in the related art;

FIG. 2 is a schematic drawing of video synthesis in layer-based synthesis mode in the related art;

FIG. 3 is a flowchart of a method for processing distinctive service information at a network side in an embodiment of the present invention;

FIG. 4 is a flowchart of a method for processing distinctive service information at a user side in an embodiment of the present invention;

FIG. 5 shows an information flow in an embodiment of the present invention;

FIG. 6 shows a structure of a system in an embodiment of the present invention;

FIG. 7 shows a play window in an embodiment of the present invention;

FIG. 8 shows a basic structure of a multicast replication node in an embodiment of the present invention;

FIG. 9 shows a detailed structure of a multicast replication node in an embodiment of the present invention;

FIG. 10 shows a structure of a user-side apparatus in an embodiment of the present invention; and

FIG. 11 is a detailed flowchart of a method for processing distinctive service information in an embodiment of the present invention.

### Detailed Description of the Invention

In the embodiments of the present invention, the distinctive service information is processed independently of the normal service information, and the information is transmitted in multicast mode. Therefore, the distinctive service information is played independently of the normal service information through a temporary and independent channel and window. The time-criticalness of the distinctive service information is fulfilled, and network resources are saved.

The normal service information in the embodiments of the present invention refers to traditional television programs such as regular CCTV news broadcast and TV series; distinctive service information refers to time-critical and real-time programs such as major event reports and real-time quotation of the stock market. Multicast addresses include Media Access Control (MAC) address and/or multicast Internet Protocol (IP) address. Because a standard conversion relation exists between a multicast MAC address and a multicast IP address, the other type of multicast address may be inferred only if one type of multicast address is known. The embodiments of the present invention take the normal service information and the distinctive service information in the IPTV service as examples.

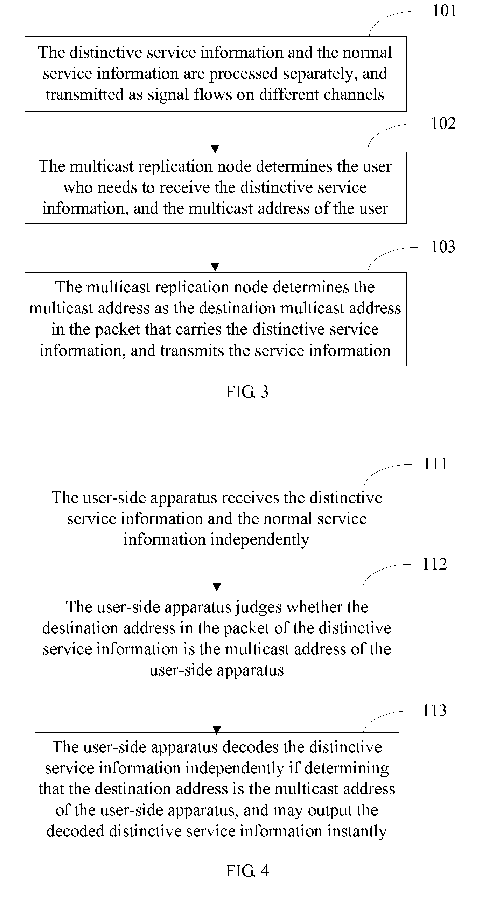

As shown in FIG. 3, the method for processing distinctive service information in this embodiment includes the following steps:

Step 101: The distinctive service information and the normal service information are processed independently of each other, and are transmitted as signal flows on different channels to the multicast replication node. The processing includes coding and modulation.

Step 102: The multicast replication node determines a user who needs to receive the distinctive service information and the multicast address of the user.

Step 103: The multicast replication node replaces the destination address in the packet of the distinctive service information with the multicast address of the user, and multicasts the distinctive service information and broadcasts the normal service information to the user-side apparatus that covers the user.

The foregoing process is about a method for a network side to process the distinctive service information. Accordingly, a method for a user side to process the distinctive service information is described below. As shown in FIG. 4, this method includes the following steps:

Step 111: A user-side apparatus receives the distinctive service information and the normal service information independently.

Step 112: The user-side apparatus judges whether the destination address in the packet of the distinctive service information is the multicast address of the user-side apparatus.

Step 113: The user-side apparatus decodes the distinctive service information independently if determining that the destination address is the multicast address of the user-side apparatus, and may further output the decoded distinctive service information instantly.

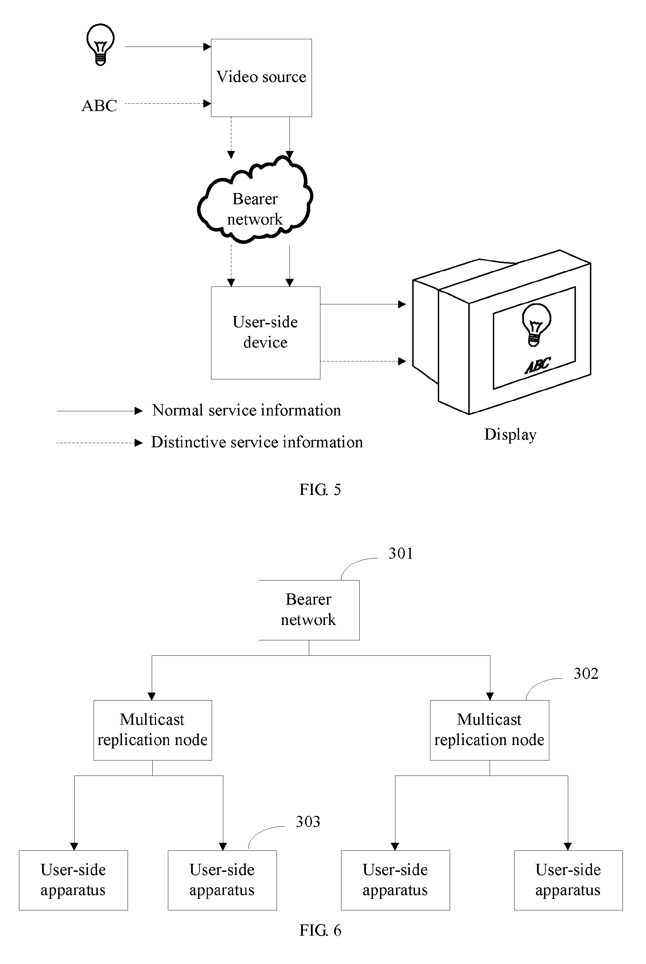

The embodiment shown in FIG. 5 provides a signal flow instance about the distinctive service information and the normal service information to better illustrate the processing process. In FIG. 5, the bulb indicates normal service information, and "ABC" indicates distinctive service information.

As shown in FIG. 6, a system for processing distinctive service information is provided in this embodiment. The system includes a bearer network 301, a multicast replication node 302, and a user-side apparatus 303. The connection relations shown in FIG. 6 illustrate only network connection relations, and the actual device connections are not limited to the illustration.

The bearer network 301 is configured to: receive normal service information and distinctive service information from one or more video sources, and forward the normal service information and the distinctive service information to each multicast replication node 302. The bearer network 301 includes all the devices between the video source and the multicast replication node 302.

The multicast replication node 302 is configured to: receive the service information sent by the bearer network 301; distinguish the normal service information from the distinctive service information through a service identifier or through the multicast address, namely, the destination address, in the packet that carries the service information; determine a user who needs to receive the distinctive service information and the multicast address of the user according to the binding relation between the distinctive service information and the normal service information, the channel or the user; substitute the multicast address of the user for the multicast address of the distinctive service to serve as the destination address in the packet that carries the service information; and send the packet to the determined user through the physical line or logical channel of the user. Multicast replication nodes 302 come in many types, including the apparatuses capable of replicating service information such as a Digital Subscriber Line Access Multiplexer (DSLAM) and a Broadband Remote Access Server (BRAS). The BRAS can obtain the physical line or logical channel of the user-side apparatus 303 through the DSLAM.

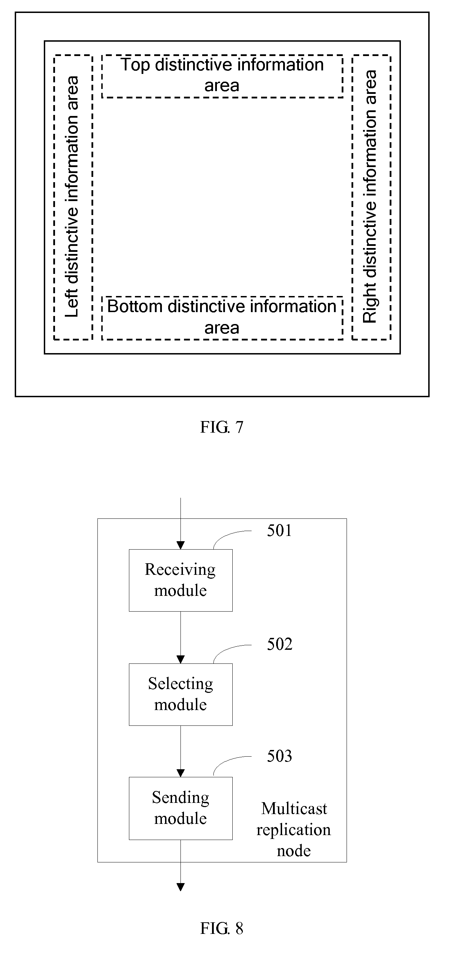

The user-side apparatus 303 is the apparatus that covers the user, and is configured to: receive the distinctive service information and the normal service information sent by the multicast replication node 302; control the main window among the windows to play the normal service information, as shown in the central part of FIG. 7; and control the non-main window among the windows to play the distinctive service information, as shown in the edge part of FIG. 7. However, the window of the edge part is not limited to that, and may increase or decrease, depending on the type of the distinctive service information. The user-side apparatus 303 may be an independent physical entity, or may be integrated in many other types of devices such as a Set Top Box (STB) and a Personal Computer (PC).

As shown in FIG. 8, the multicast replication node 302 includes: a receiving module 501, a selecting module 502, and a sending module 503.

The receiving module 501 is configured to receive the distinctive service information and the normal service information.

The selecting module 502 is configured to: determine a user who needs to receive the distinctive service information and the multicast address of the user according to the binding relation between the distinctive service information and the normal service information, the channel, or the user, and further determine the physical line or logical channel connected to the user. The selecting module 502 may further include: a selecting unit, configured to determine a user who needs to receive the distinctive service information and the multicast address of the user according to the binding relation between the distinctive service information and the normal service information, the channel, or the user; and a channel determining unit, configured to determine the physical line or logical channel connected to the user.

The sending module 503 is configured to: convert the multicast address of the user into the destination address in the packet that carries the distinctive service information, and transmit the packet to the user through the determined physical line or logical channel.

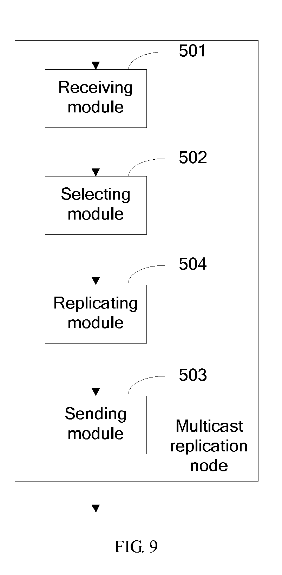

The multicast replication node 302 may further include a replicating module 504. As shown in FIG. 9, the replicating module 504 is configured to replicate the distinctive service information according to the quantity of users selected by the selecting module 502. The sending module 503 sends the replicated distinctive service information to the selected users respectively.

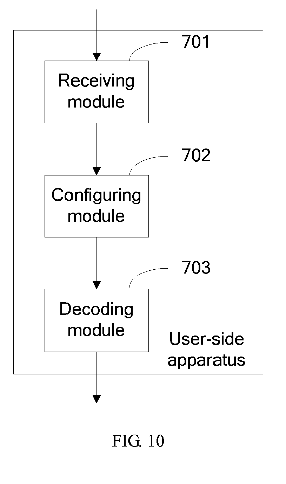

As shown in FIG. 10, the user-side apparatus 303 includes: a receiving module 701, a configuring module 702, and a decoding module 703.

The receiving module 701 is configured to receive the distinctive service information and the normal service information.

The configuring module 702 is configured to: judge whether the destination address in the packet that carries the distinctive service information is a multicast address that enables local receiving, namely, whether the destination address matches the multicast address in the local multicast forwarding table entries. The local multicast address may be configured by default, or allocated at the time of accessing the network.

The decoding module 703 is configured to: decode the distinctive service information independently, control the play window, and output the distinctive service information to the user through an edge window independent of the main window.

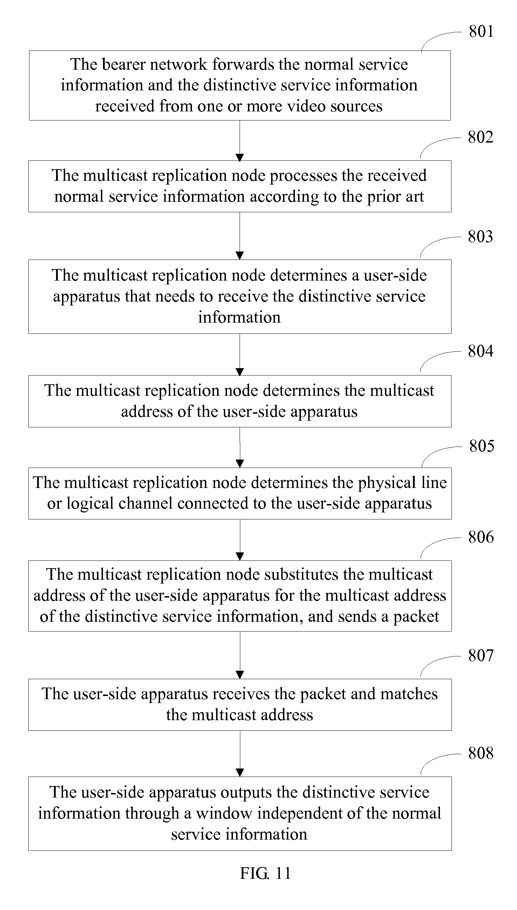

As shown in FIG. 11, the process of processing the distinctive service information includes the following steps:

Step 801: The bearer network 301 forwards normal service information and distinctive service information from one or more video sources, and sends the normal service information and the distinctive service information to each multicast replication node 302 respectively. It is not necessary to perform video synthesis for the distinctive service information and the normal service information. Therefore, each video source may adopt different coding and modulation modes, thus making it more flexible to implement the normal service information and the distinctive service information.

Step 802: The multicast replication node 302 processes the received normal service information according to the related art, and processes the received distinctive service information in the following way. The process proceeds to step 803.

Step 803: The multicast replication node 302 determines the user-side apparatus 303 that needs to receive the distinctive service information according to the binding relation between the multicast address of the distinctive service information and the normal service information, the channel, the fixed time segment, or the user-side apparatus 303.

Step 804: The multicast replication node 302 determines the multicast address of the user-side apparatus 303. When the user-side apparatus 303 sets up a connection with the multicast replication node 302, the multicast replication node 302 obtains the default multicast address of the user-side apparatus 303, or the multicast replication node 302 allocates a multicast address to the user-side apparatus 303.

Step 805: The multicast replication node 302 determines the physical line or logical channel connected to the user-side apparatus 303. When the user-side apparatus 303 sets up a connection with the multicast replication node 302, the multicast replication node 302 records the physical line or logical channel of the user-side apparatus 303. The physical line may be identified through a connection port, and the logical channel may be identified through a frame identifier in the transmission information.

Step 806: The multicast replication node 302 substitutes the multicast address of the user-side apparatus 303 for the multicast address of the distinctive service information to serve as a destination address in the packet that carries the distinctive service information, and sends the packet to the determined user-side apparatus 303 through the determined physical line or logical channel.

Step 807: The user-side apparatus 303 receives the packet, and judges whether the destination address in the packet matches the multicast address in the local multicast forwarding table entries. If they match, the process proceeds to step 808; otherwise, the packet is discarded.

Step 808: The user-side apparatus 303 determines that the packet carries the distinctive service information according to the multicast address, decodes the distinctive service information independently, controls the output of the information in the window, and outputs the distinctive service information through a window independent of the normal service information (namely, a non-main window or edge window). Specifically, such operations may be implemented in many ways such as the Picture-In-Picture (PIP) technology, or by substituting the distinctive service information for the normal service information at the edge part of the window, or by outputting the distinctive service information through an automatic pop-up window.

In step 803: The multicast replication node 302 knows the binding relation between the multicast address of the distinctive service information and the identifier of the normal service information, the channel, or the user-side apparatus 303 according to the locally stored binding relation or the received configuration information. The user management system in the Operation Support System (OSS) connected to both the multicast replication node 302 and the user-side apparatus 303 sends the configuration information dynamically according to polices. A binding relation instance is given below:

**Table 1**

| Multicast Address of Distinctive Service Information | Binding Relation | |
|---|---|---|
| Multicast IP address of service 1 | IP address of user 1 | MAC address of user 2 |
| Multicast MAC address of service 2 | Physical line of user 1 | Logical channel of user 2 |
| Multicast address of service 3 | Normal service information 1 | Normal service information 4 |
| Multicast address of service 4 | Channel 2 | Channel 3 |
| Multicast address of service 5 | 8:30 | 20:00 |

The IP address of the user is a configured IP address that is fixed, or an IP address configured when the user accesses the network. The multicast IP address of the user is an IP address exclusively configured for multicast services. The configuration of the MAC address of the user is similar to the configuration of the IP address. User information includes: IP address, multicast IP address, MAC address, multicast MAC address, physical line identifier (namely, port number), and logical channel identifier (namely, frame address). "Normal service information 1" is an instance of the normal service information identifier.

Table 1 shows that the multicast addresses include multicast IP address and/or multicast MAC address. A standard mapping relation exists between the IP address and the MAC address, which are mutually convertible. Therefore, the multicast MAC address can be inferred only if the multicast IP address is known, and vice versa. In the data packet that carries the distinctive service information, the multicast IP address of the distinctive service information is replaced with the multicast IP address of the user; in the data frame that carries the distinctive service information, the multicast MAC address of the distinctive service information is replaced with the multicast MAC address of the user.

After knowing the user bound to the multicast address of the distinctive service information, the multicast replication node 302 judges whether a connection is already set up with the user-side apparatus 303 that covers the user in the binding relation, and sends the distinctive service information to the connected user-side apparatus 303.

After finding that normal service information is bound to the multicast address of the distinctive service information, the multicast replication node 302 determines the user who is receiving the normal service information in the binding relation, and sends the distinctive service information to the user-side apparatus 303 that covers the user.

After finding that a channel is bound to the multicast address of the distinctive service information, the multicast replication node 302 determines the user who is receiving the channel in the binding relation, and sends the distinctive service information to the user-side apparatus 303 that covers the user.

After finding that a fixed time segment is bound to the multicast address of the distinctive service information, the multicast replication node 302 determines a user who is receiving any service information in this fixed time segment, and sends the distinctive service information to the user-side apparatus 303 that covers the user.

It is understandable to those skilled in the art that all or part of the steps in the foregoing embodiments may be performed through hardware instructed by a program. The program may be stored in a computer-readable storage medium such as a Read-Only Memory/Random Access Memory (ROM/RAM), a magnetic disk, and a compact disk.

In the embodiments of the present invention, the distinctive service information and the normal service information are processed separately so that the two types of service information can be implemented more flexibly. Moreover, the distinctive service information is transmitted independently of the normal service information. Therefore, the distinctive service information can be transmitted in multicast mode easily, without strictly depending on the normal service information; and the multicast transmission of the distinctive service information is more flexible. Meanwhile, in the embodiments of the present invention, the distinctive service information is decoded independently, and played through a temporary and independent window. Therefore, the time-criticalness of the distinctive service information is fulfilled, and network resources are saved because no independent channel needs to be occupied.

It is apparent that those skilled in the art can make various modifications and variations to the present invention without departing from the scope of the present invention. The present invention is intended to cover such modifications and variations provided that they fall in the scope of protection defined by the following claims or their equivalents.

## Claims

1. A method for processing distinctive service information, **characterized by** comprising:
receiving distinctive service information transmitted independently;
determining a multicast address of a user who needs to receive the distinctive service information; and
replacing a destination address in a packet of the distinctive service information with the multicast address of the user, and multicasting the distinctive service information to the user.

2. The method of claim 1, **characterized in that** the determining of the user who needs to receive the distinctive service information comprises:
obtaining a binding relation between the distinctive service information and an identifier of normal service information;
determining the user currently receiving the normal service information to be the user who needs to receive the distinctive service information according to the binding relation.

3. The method of claim 1, **characterized in that** the determining of the user who needs to receive the distinctive service information comprises:
obtaining a binding relation between a distinctive service and a channel;
determining the user who is currently receiving the channel to be the user who needs to receive the distinctive service information according to the binding relation.

4. The method of claim 1, **characterized in that** the determining of the user who needs to receive the distinctive service information comprises:
obtaining a binding relation between a distinctive service and user information; and
determining the user currently receiving service information among the users in the binding relation to be the user who needs to receive the distinctive service information according to the binding relation.

5. The method of claim 1, **characterized in that** the determining of the user who needs to receive the distinctive service information comprises:
obtaining a binding relation between a distinctive service and a fixed time segment;
determining the user currently receiving service information to be the user who needs to receive the distinctive service information according to the binding relation.

6. The method of any one of claims 2 to 5, **characterized in that** the binding relation is determined according to obtained configuration information.

7. The method of claim 1, **characterized in that** the replacing of the destination address in the packet of the distinctive service information with the multicast address of the user comprises:
converting the multicast address of the distinctive service information into the multicast address of the user.

8. The method of claim 1, **characterized in that** further comprising: determining a physical line or a logical channel of the user before multicasting the distinctive service information to the user, wherein:
the multicasting of the distinctive service information to the user is: transmitting the packet through the physical line or the logical channel.

9. The method of claim 1, **characterized in that** further comprising: decoding the distinctive service information independently after the user receives the distinctive service information and determines that the destination address is the multicast address of the user.

10. A multicast replication node, **characterized in that** comprising:
a receiving module, configured to receive distinctive service information transmitted independently;
a selecting module, configured to determine a multicast address of a user who needs to receive the distinctive service information; and
a sending module, configured to replace a destination address in a packet of the distinctive service information with the multicast address of the user, and multicast the distinctive service information to the user.

11. The multicast replication node of claim 10, **characterized in that** the selecting module determines the user who needs to receive the distinctive service information according to the distinctive service information and a configured binding relation.

12. The multicast replication node of claim 10, **characterized in that** the destination address in the packet of the distinctive service information is the multicast address of the distinctive service information.

13. The multicast replication node of claim 10, **characterized in that:**
the selecting module is further configured to determine a physical line or a logical channel of the user who needs to receive the distinctive service information; and
the sending module transmits the distinctive service information through the physical line or the logical channel.

14. A user-side apparatus, **characterized in that** comprising:
a receiving module, configured to receive distinctive service information independently;
a configuring module, configured to judge whether a destination address in a packet of the distinctive service information is a multicast address of the user-side apparatus; and
a decoding module, configured to decode the distinctive service information independently and output the decoded information if the configuring module determines that the destination address is the multicast address of the user-side apparatus.

15. The user-side apparatus of claim 14, **characterized in that** the decoding module comprises:
a module for decoding the distinctive service information independently; and
a module for controlling a play window and outputting the distinctive service information to a user through an edge window independent of a main window.

16. The user-side apparatus of claim 14 or 15, **characterized in that** the user-side apparatus is an independent physical entity, or a physical entity embedded into a set top box or personal computer.

17. A system for processing distinctive service information, **characterized by** comprising:
a bearer network, configured to: receive normal service information and distinctive service information from one or more video sources, and forward the normal service information and the distinctive service information to each multicast replication node;
the multicast replication node, configured to: receive the service information sent by the bearer network, distinguish the normal service information from the distinctive service information in the service information, determine a user who needs to receive the distinctive service information and a multicast address of the user, replace a destination address in a packet of the distinctive service information with the multicast address of the user, and send the packet of the distinctive service information to the determined user; and
a user-side apparatus, configured to: receive the distinctive service information and the normal service information sent by the multicast replication node, control a main window among windows to play the normal service information, and control a non-main window among the windows to play the distinctive service information.

18. The system of claim 17, **characterized in that** the multicast replication node determines the user who needs to receive the distinctive service information according to the distinctive service information and a configured binding relation.

19. The system of claim 17, **characterized in that** the user-side apparatus is further configured to: judge whether the destination address in the packet of the distinctive service information is the multicast address of the user-side apparatus, and if the destination address in the packet of the distinctive service information is the multicast address of the user-side apparatus, decode the distinctive service information independently and output the decoded distinctive service information.

20. The system of claim 17, **characterized in that** the user-side apparatus is an independent physical entity, or a physical entity embedded into a set top box or personal computer.
